# EUROPEAN PATENT SPECIFICATION

(11) **EP 4 274 219 B1**
(45) Date of publication and mention of the grant of the patent: **30.09.2026**
(21) Application number: 22763480.5
(22) Date of filing: 09.02.2022
(51) Int. Cl.: G03B 30/00, H04N 23/90, H04N 23/69, H04N 23/63, H04N 17/00, H04N 23/45, G03B 17/12, H04N 5/262

(54) **ELECTRONIC DEVICE COMPRISING PLURALITY OF LENSES, AND METHOD FOR CONTROLLING SAME**
ELEKTRONISCHE VORRICHTUNG MIT MEHREREN LINSEN UND VERFAHREN ZUR STEUERUNG DAVON
DISPOSITIF ÉLECTRONIQUE COMPRENANT UNE PLURALITÉ D'OBJECTIFS ET PROCÉDÉ DE COMMANDE DUDIT DISPOSITIF

(30) Priority: 03.03.2021 KR 20210028134
(43) Date of publication of application: 08.11.2023
(73) Proprietor: Samsung Electronics Co., Ltd., Suwon-si, Gyeonggi-do 16677 (KR)
(72) Inventor: JEONG, Taekseong, Suwon-si, Gyeonggi-do 16677 (KR)
(74) Representative: HGF
(86) International application number: PCT/KR2022/001966
(87) International publication number: WO 2022/186495

(56) References cited:
- EP-A1- 3 720 112
- JP-A- 2005 198 155
- KR-A- 20150 006 237
- KR-A- 20180 054 825
- KR-A- 20200 101 207
- KR-A- 20200 132 981
- US-A1- 2012 026 366
- US-A1- 2020 267 326

## Description

### [Technical Field]

Various embodiments according to the disclosure relate to an electronic device including multiple cameras, and a technology for controlling the electronic device.

### [Background Art]

Recently, electronic devices equipped with cameras such as digital cameras, digital camcorders, or smartphones have become widespread. Such electronic devices equipped with cameras may provide photography functions. For example, an electronic device may use images captured in real time by cameras so as to output preview screens on a display, and may acquire captured images from the cameras if capture inputs are received.

Meanwhile, an electronic device may include multiple cameras. For example, an electronic device may include multiple cameras having different fields of view. The multiple cameras may capture images with different fields of view with regard to an identical subject. The electronic device may switch cameras if optical magnification is reached while individual cameras perform digital zoom during zoom in/out operations.

EP 3 720 112 A1 discloses a zooming method for an electronic device having a plurality of camera units, in which a first image is acquired by a first camera unit, a current frame image is obtained by scaling the first image according to a zoom instruction, a second image is acquired by a second camera unit, and output is switched to the second image. This document addresses image jump during camera switching by deforming either the current frame image or the second image according to an adjustment coefficient.

US 2020 0267326 A1 discloses an electronic device having a plurality of cameras, a display and a processor, wherein a preview image acquired by a first camera is displayed, a further camera is activated in response to a user input, and a magnification adjustment input is received while an image is acquired by the activated camera. The preview is then displayed based at least in part on the image acquired by the activated camera, thereby reducing delay when switching cameras during magnification adjustment.

US 2012 0026366 A1 discloses a continuous electronic zoom system having multiple image acquisition devices with different fixed fields of view, such as wide and tele image acquisition devices. A requested zoom is received, one of the image acquisition devices is selected based on the requested zoom, and digital zoom is performed on an acquired image frame.

This document also discloses determining alignment offsets between image sensor arrays to facilitate uninterrupted imaging when switching between the image acquisition devices.

### [Disclosure of Invention]

### [Technical Problem]

Meanwhile, there has recently been development of cameras configured such that the field of view can be adjusted in a wide range of angles by using a driving device (for example, a prism or a mirror), thereby providing the user with images in different positions. In the case of a camera configuration in which the field of view is adjusted in this manner, cameras are switched if the camera default magnification is reached, and a zoom operation is performed while the image center is fixed in the middle at the camera default magnification.

There is a problem in that, if zoom in/output is performed with reference to the image center at the default magnification of each camera, the image center movement occurs discontinuously with regard to full zoom.

Technical problems to be solved by the disclosure are not limited to the above-mentioned technical problems, and other technical problems not mentioned herein will be clearly understood from the following description by those skilled in the art to which the disclosure pertains.

### [Solution to Problem]

The scope of protection of the present invention is defined by the appended independent claims. Optional features are specified by the dependent claims.

### [Advantageous Effects of Invention]

An electronic device and a method in various embodiments according to the disclosure may move image center points linearly during camera switching such that, by improving the quality of zoom in/out operations, more natural camera operations are implemented.

Various other advantageous effects identified explicitly or implicitly throughout the disclosure may be provided.

### [Brief Description of Drawings]

FIG. 1 is a block diagram of an electronic device according to an embodiment.
FIG. 2 is a flowchart illustrating an electronic device according to an embodiment switching cameras in response to a user input for changing magnification.
FIG. 3 is a flowchart illustrating an electronic device according to an embodiment calculating the amount of movement of a center point to a final magnification and then moving the center point.
FIG. 4A illustrates the field of view of each of multiple cameras of an electronic device according to an embodiment and the center of the field of view.
FIG. 4B illustrates a movement of an image center while an electronic device according to an embodiment performs a zoom-out operation.
FIG. 5A illustrates the field of view of each of multiple cameras of an electronic device according to an embodiment and the center of the field of view.
FIG. 5B illustrates a movement of an image center while an electronic device according to an embodiment performs a zoom-in operation.
FIG. 6 is a block diagram of an electronic device inside a network environment according to an embodiment.
FIG. 7 is a block diagram illustrating a camera module according to an embodiment.

In connection with descriptions of the drawings, identical or similar components may be given identical or similar reference numerals.

### [Mode for Carrying out the Invention]

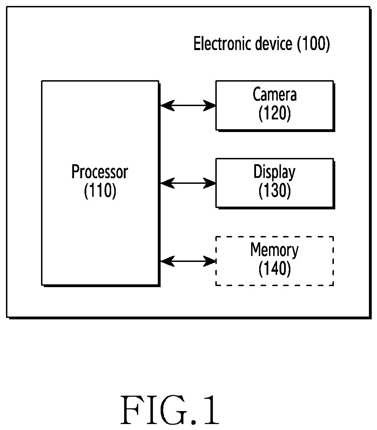

FIG. 1 is a block diagram of an electronic device according to an embodiment.

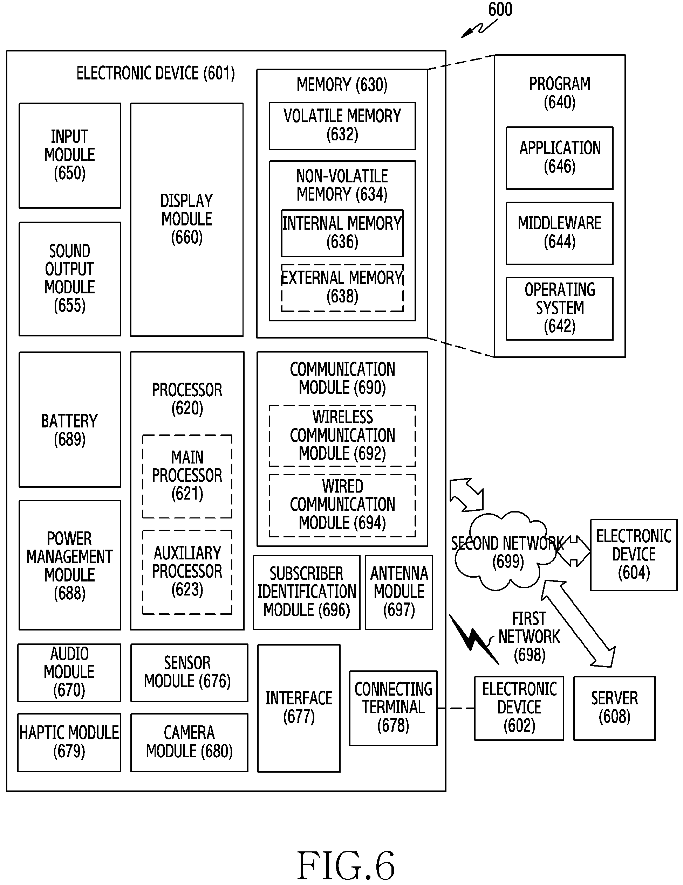

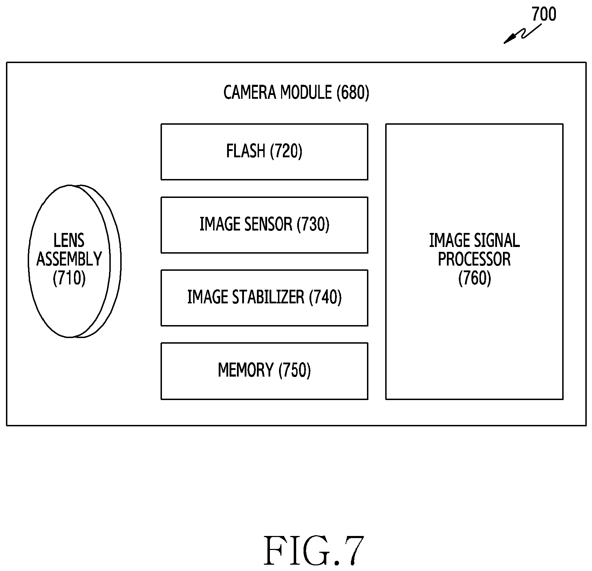

Referring to FIG. 1, the electronic device 100 (for example, the electronic device 601 in FIG. 6) may include a processor 110, a camera 120 (for example, the camera module 680 in FIG. 6 and FIG. 7), a display 130, and a memory 140. In various embodiments, the electronic device 100 may include additional components other than the components illustrated in FIG. 1, or at least one of the components illustrated in FIG. 1 may be omitted.

According to an embodiment, the processor 110 may use instructions stored in the memory 140 so as to execute computation or data processing related to control and/or communication of at least one other component of the electronic device 100. According to an embodiment, the processor 110 may include at least one of a CPU, a GPU, a micro controller unit (MCU), a sensor hub, a supplementary processor, a communication processor, an application processor, an application specific integrated circuit (ASIC), and field programmable gate arrays (FPGA), and may have multiple cores.

According to an embodiment, the processor 110 may acquire an image through the camera 120. According to an embodiment, the camera 120 may include multiple cameras. For example, the camera 120 may include at least two of a tele camera, a wide camera, or an ultra-wide camera. According to an embodiment, the tele camera may include a prism or a mirror. The processor 110 may move the field of view (FOV) of the tele camera by using the prism or mirror included in the tele camera.

According to an embodiment, the processor 110 may provide the image acquired through the camera 120 to the display 130 in a preview type. According to an embodiment, the processor 110 may display multiple objects (or icons) related to multiple lenses included in the camera 120 on the display 130. According to an embodiment, the processor 110 may acquire a user input (for example, a tap, a touch) related to one of the multiple objects. According to an embodiment, the processor 110 may acquire an image at a zoom level of a lens related to a selected icon and may display the same on the display 130.

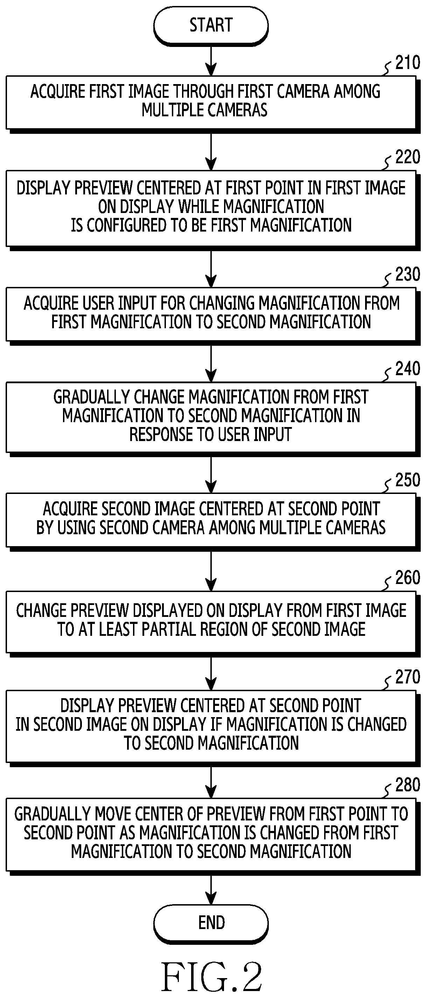

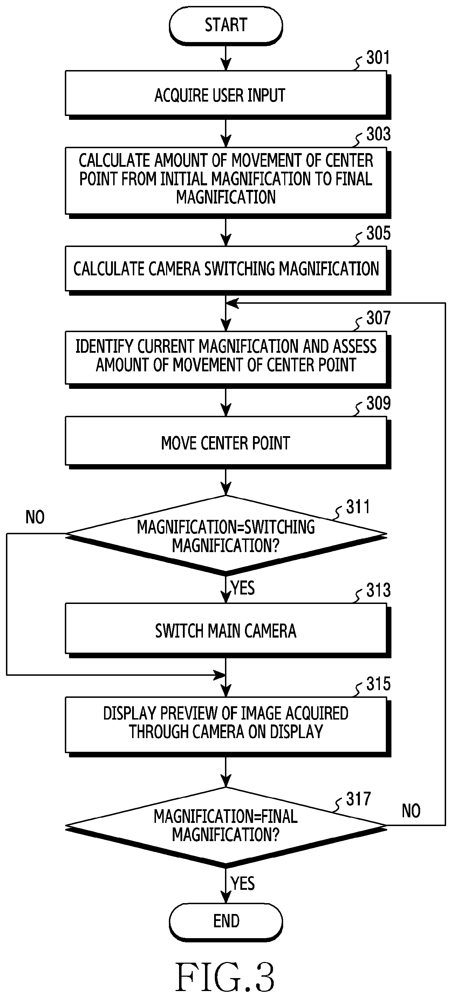

According to an embodiment, the processor 110 may change magnification in response to acquiring a user input for changing the zoom level. For example, the processor 110 may make a gradual change from the initial magnification to the final magnification. According to an embodiment, the processor 110 may move the center of the preview as the magnification changes. For example, the processor 110 may gradually change the center of the preview from a first point to a second point as the magnification is gradually changed from the initial magnification to the final magnification. Detailed operations of the processor 110 will be described later with reference to FIG. 2 and FIG. 3.

According to an embodiment, the processor 110 may move the center of the preview by using a reflective member (for example, a prism or a mirror). According to an embodiment, the reflective member may change the path of light from an external light source such that the same can pass through a lens assembly (for example, the lens assembly 720 in FIG. 7).

According to an embodiment, the camera 120 may acquire (or capture) an image (for example, a still image and a moving image). The processor 110 may acquire images by using multiple cameras. For example, the processor 110 may acquire images having different fields of view by using multiple cameras. According to an embodiment, an image signal processor electrically connected to the camera 120 may distinguish an object (for example, a person) and the background included in an image (for example, a preview image or an image stored in the memory 140). According to an embodiment, the image signal processor may be implemented separately from the camera 120 or as a part of the processor 110. According to an embodiment, the camera 220 may include an image sensor (for example, the image sensor 730 in FIG. 7). For example, each of the multiple cameras may include image sensors, respectively. According to an embodiment, the image sensor may acquire and/or process color information.

According to an embodiment, the camera 120 may include multiple cameras, and the multiple cameras may have different zoom levels, respectively. For example, each of the multiple cameras may include at least one of an ultra-wide lens, a wide lens, or a tele lens.

According to an embodiment, the camera 120 may include a periscopic lens. For example, the tele camera may be a periscopic lens-type camera. According to an embodiment, when the camera 120 includes a periscopic lens, the reflective member (for example, a prism or a mirror) may make a rotating (or translating) motion with regard to two axes substantially perpendicular to an optical axis. For example, the rotating motion may include a pitching motion or a yawing motion. According to an embodiment, a motion related to a specific rotational axis perpendicular to the optical axis may be defined as a pitching motion, and a motion related to another specific rotational axis perpendicular to the optical axis may be defined as a yawing motion. According to an embodiment, a rotational axis parallel to the optical axis may be perpendicular to the orthogonal plane of the pitching motion and the yawing motion.

According to an embodiment, the display 130 may display multiple objects related to multiple lenses included in the camera 120. The processor 110 may display multiple objects related to multiple lenses included in the camera 120 on the display 130. According to an embodiment, the display 130 may display an image acquired at the zoom level of a lens related to an icon selected by a user input among the multiple objects.

According to an embodiment, the display 130 may generate driving signals by converting an image signal, a data signal, an on-screen display (OSD) signal, a control signal, and the like processed by the processor 110. According to an embodiment, the display 130 may be implemented by a plasma display panel (PDP), a liquid crystal display (LCD), an organic light emitting diode (OLED), a flexible display, or the like, and may also be implemented by a 3D display. According to an embodiment, the display 130 may be configured by a touch screen and used as an input device in addition to as an output device.

According to an embodiment, the memory 140 may refer to a set of one or more memories. According to an embodiment, the memory 140 may store data and/or commands received from other components (for example, the processor 110 and the display 130) or generated by other components.

FIG. 2 is a flowchart illustrating an electronic device according to an embodiment switching cameras in response to a user input for changing magnification.

Referring to FIG. 2, a processor 110 according to an embodiment may acquire a first image through a first camera among multiple cameras in operation 210. According to an embodiment, the processor 110 may display an image acquired through the first camera on a display 130 as a preview in a state in which a camera application stored in a memory 140 is executed. For example, the first camera may be one of a tele camera, a wide camera, and an ultra-wide camera.

According to an embodiment, the processor 110 may display a preview centered at a first point among the first image on the display in a state in which a first magnification is configured as the magnification thereof in operation 220. According to an embodiment, the processor 110 may display an image received at the zoom level of the first camera on the display. For example, the processor 110 may display an image received at the zoom level (for example, x5.0 magnification) of the tele camera on the display 130. As another example, the processor 110 may display an image received at the zoom level (for example, x1.0 magnification) of the wide camera on the display 130. As another example, the processor 110 may display an image received at the zoom level (for example, x0.5 magnification) of the ultra-wide camera on the display 130. According to various embodiments, the center of images acquired through each of the cameras may differ depending on the camera type.

According to an embodiment, the tele camera may move the center of an image to a position within the range of a first zoom level (for example, x1.0 magnification) by using a reflective member (for example, a prism or a mirror). According to an embodiment, the tele camera move the center of an image to a position exceeding the range of a second zoom level (for example, x5.0 magnification) by using digital zoom. According to an embodiment, the reflective member may be connected to a reflective member holder (not illustrated) so as to move the center of an image upwards/downwards/leftwards/rightwards.

According to an embodiment, the processor 110 may acquire a user input for changing the magnification from a first magnification to a second magnification in operation 230. For example, if the first magnification is larger than the second magnification, a user input for changing from the first magnification to the second magnification may be understood as a zoom-out input. As another example, if the first magnification is smaller than the second magnification, a user input for changing from the first magnification to the second magnification may be understood as a zoom-in input.

According to an embodiment, the processor 110 may display an image acquired through the camera 120 on the display 130 and may display at least two icons among a first object related to a first camera (for example, a tele camera), a second object related to a second camera (for example, a wide camera), and a third object related to a third camera (for example, an ultra-wide camera) among multiple cameras in at least a partial region of the display 130. According to an embodiment, in a state in which a first magnification is configured as the magnification, the processor 110 may acquire a user input regarding a second object related to a second magnification or a third object related to the second magnification.

According to an embodiment, the processor 110 may display a sliding bar on the display 130 such that the same slides according to a magnification changed by a zoom-in or zoom-out operation. According to an embodiment, objects representing respective cameras provided in the electronic device 100 may be disposed on the sliding bar in a magnification order (for example, an ultra-wide camera, a wide camera, a tele camera) and may move according to movements of the sliding bar. According to an embodiment, the objects may be displayed on the display 130 or disappear, while moving along the sliding bar. According to an embodiment, the processor 110 may acquire a user input (for example, a tap or a drag) regarding the sliding bar. According to an embodiment, the processor 110 may acquire a user input regarding the sliding bar intended to change the magnification from the configured first magnification to the second magnification.

According to an embodiment, the processor 110 may activate the second camera before acquiring a user input, and may switch the activated second camera to a standby state.

According to an embodiment, the processor 110 may gradually change the magnification from the first magnification to the second magnification in response to a user input in operation 240. According to an embodiment, the processor 110 may change the magnification in response to a user input regarding one of multiple objects (for example, icons) related to multiple cameras disposed in at least a partial region of the display 130. According to an embodiment, in a state in which the first magnification is configured as the magnification, the processor 110 may gradually change the magnification from the first magnification to the second magnification in response to selection of a second object related to a second camera.

According to an embodiment, the processor 110 may acquire a second image centered at a second point by using the second camera among the multiple cameras in operation 250. According to an embodiment, the processor 110 may display an image received at the zoom level of the second camera on the display.

For example, in a state in which an image received at the zoom level (for example, x5.0 magnification) of the tele camera is displayed on the display 130, the processor 110 may display an image received at the zoom level (for example, x1.0 magnification) of the wide camera in response to a user input (for example, a zoom-out input) regarding the object related to the wide camera on the display 130.

As another example, in a state in which an image received at the zoom level of the wide camera is displayed on the display 130, the processor 110 may display an image received at the zoom level of the tele camera in response to a user input (for example, a zoom-in input) regarding the object related to the tele camera on the display 130. However, the disclosure is not limited thereto, and the second camera may include an ultra-wide camera.

According to an embodiment, the processor 110 may acquire a second image centered at a second point. According to an embodiment, the second point may differ from the first point. For example, assuming that the first camera is a tele camera, and that the second camera is a wide camera or an ultra-wide camera, the center of images acquired by the respective cameras may differ. As another example, assuming that the first camera is a wide camera or an ultra-wide camera, and that the second camera is a tele camera, the center of images acquired by the respective cameras may differ.

According to an embodiment, the second point may be identical to the first point. For example, assuming that the first camera is a wide camera, and that the second camera is an ultra-wide camera, the center of images acquired by the respective cameras may be identical. As another example, assuming that the first camera is an ultra-wide camera, and that the second camera is a wide camera, the center of images acquired by the respective cameras may be identical.

According to an embodiment, the processor 110 may change the preview displayed on the display 130 from the first image to at least a partial region of the second image in operation 260. According to an embodiment, in a state in which a first image acquired through the first camera is displayed, the processor 110 may change the preview displayed on the display 130 to at least a partial region of a second image acquired through the second camera in response to a gradual change of the magnification from the first magnification to the second magnification.

According to an embodiment, if the magnification is changed to the second magnification, the processor 110 may display a preview centered at a second point in the second image on the display 130 in operation 270. According to an embodiment, the processor 110 may output a preview centered at the second point in the second image to the display 130 in response to completion of the change from the first magnification to the second magnification.

According to an embodiment, the processor 110 may gradually move the center of the preview from the first point to the second point as the magnification is changed from the first magnification to the second magnification in operation 280. For example, the processor 110 may linearly move the center of the preview displayed on the display 130 from the first point to the second point in response to a change from the first magnification to the second magnification.

According to the above-described embodiment, the electronic device 100 may linearly move the image center in response to a change in camera magnification such that the user can make natural zoom-in/out operations.

FIG. 3 is a flowchart illustrating an electronic device according to an embodiment calculating the amount of movement of a center point to a final magnification and then moving the center point. In the following description with reference to FIG. 3, descriptions similar or identical to previous descriptions may be simplified or omitted.

Referring to FIG. 3, a processor 110 according to an embodiment may acquire a user input in operation 301. According to an embodiment, the processor 110 may display at least two icons among a first object related to a first camera (for example, a tele camera), a second object related to a second camera (for example, a wide camera), and a third object related to a third camera (for example, an ultra-wide camera) among multiple cameras in at least a partial region of a display 130. According to an embodiment, the processor 110 may acquire a user input regarding the first object related to the first camera, the second object related to the second camera, or the third object related to the third camera.

According to an embodiment, the processor 110 may display a sliding bar on the display 130 such that the sliding bar slides according to a magnification changed by a zoom-in or zoom-out operation. According to an embodiment, the processor 110 may acquire a user input (for example, a tap or a drag) regarding the sliding bar.

According to an embodiment, the processor 110 may acquire a user input for pinch zoom. According to an embodiment, a pinch zoom operation may mean that the user's two fingers, which have been extended and positioned apart from each other, approach and touch each other above the display 130, or that the user's two fingers, which have approached and touched each other, are extended and moved away from each other above the display 130, thereby zooming in or out on contents displayed on the display 130.

According to an embodiment, the processor 110 may acquire a user input for button zoom. According to an embodiment, a button zoom operation may mean that, based on an object (for example, an icon) related to a designated zoom magnification displayed through the display 130 and/or a hardware button, contents displayed on the display 130 are zoomed in or out on. According to an embodiment, the processor 110 may perform a zoom operation, based on multiple user inputs. For example, upon acquiring user inputs successively or simultaneously with regard to objects (for example, icons) related to a first magnification and a second magnification, the processor 110 may zoom in or out on contents displayed on the display 130 in the order of the first magnification and the second magnification (or the second magnification and the first magnification).

According to an embodiment, in connection with assessing (determining) the final magnification, the processor 110 may perform the same, based on an intermediate magnification between the initial magnification and the final magnification. For example, based on the time of change between the initial magnification and the intermediate magnification, the processor 110 may predict the final magnification by applying the same time of change from the intermediate magnification to the final magnification.

According to an embodiment, the processor 110 may calculate the amount of movement of a center point from the initial magnification to the final magnification by using Equation 1 below in operation 303.$Pc = \frac{Pf - Pi}{Xf - Xi} ∗ \left(Xc-Xi\right) + Pi$

In Equation 1, *Pi* refers to the image center position at the initial magnification, *Pf* refers to the image center position at the final magnification, and *Pc* refers to the image center position at the current magnification. *Xi* refers to the initial magnification, *Xf* refers to the final magnification, and *Xc* refers to the current magnification.

According to an embodiment, the processor 110 may calculate the amount of movement of the center point of a preview image from the initial magnification to the final magnification in response to acquiring a user input. For example, in response to receiving a touch input regarding an object displayed on the display 130, the processor 110 may calculate the amount of movement of the center point to a magnification related to the object. For example, in a state in which an image received at a first magnification (for example, x5.0 magnification) is displayed on the display 130, the processor 110 may calculate, in response to a touch input regarding an object related to the second magnification (for example, x1.0 magnification), the amount of movement of the center point from the first magnification to the second magnification.

According to an embodiment, the processor 110 calculate a camera switching magnification in operation 305. According to an embodiment, the camera switching magnification may refer to a designated magnification at which cameras are switched. For example, switching from a tele camera to a wide camera occurs at a first magnification (for example, x5.0 magnification), the camera switching magnification may be the first magnification.

According to an embodiment, the processor 110 may acquire an offset value with regard to camera calibration. According to an embodiment, the processor 110 may calculate the camera switching magnification, based on an offset value acquired from calibration and the field-of-view center position of a camera (for example, a tele camera). For example, the offset value may be determined based on the tilt angle or tolerance of the camera generated during design or assembly.

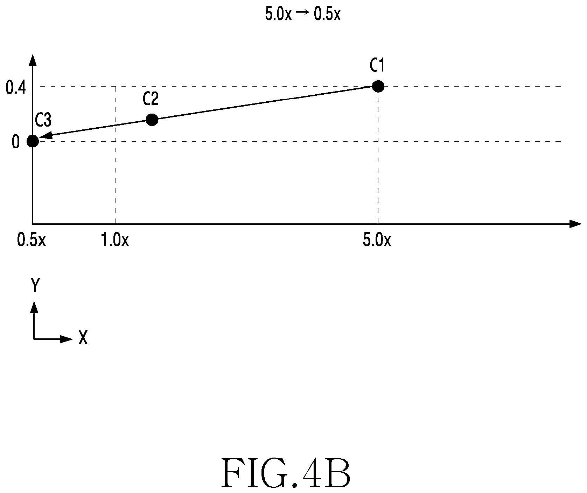

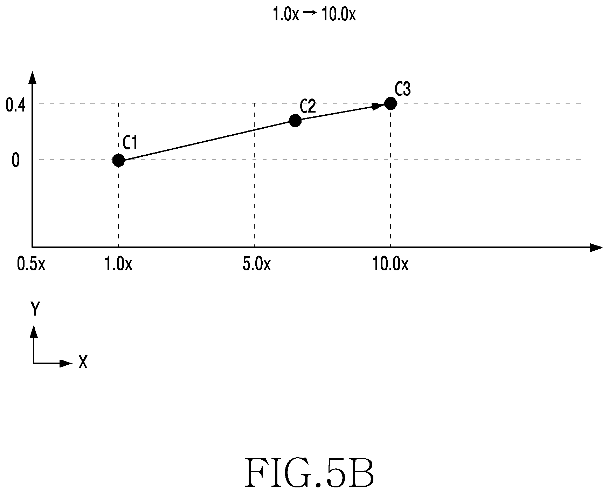

According to an embodiment, if the field-of-view (FOV) center of the camera 120 is different between cameras, the processor 110 may gradually move the center of a preview by using an offset value acquired through camera calibration. According to an embodiment, a deviation of the optical axis generated during manufacturing may be corrected by using an offset value acquired through camera calibration. For example, the offset value acquired through camera calibration may be used to correct a deviation of the optical axis caused by manufacturing errors that may occur when the camera 120 (or the camera module) is manufactured and/or assembly errors that may occur when the camera 120 is disposed in the electronic device 100. For example, as in FIG. 4B and/or FIG. 5B, the processor 110 may linearly move the center of a preview image while the magnification of the camera 120 is changed.

According to an embodiment, the processor 110 may calculate x1.125 magnification as the camera switching ratio at which an image acquisition state based on a wide camera is switched to a wide camera.

According to an embodiment, in connection with assessing the field-of-view center position, the processor 110 may perform the same based on a region displayed through the display 130. For example, if the field of view (or field-of-view region) of the camera 120 is included in a region smaller than the sensing region of an image sensor (for example, the image sensor 730 in FIG. 7) included in the camera 120 (for example, the camera module 680 in FIG. 7), the processor 110 may confirm that the field-of-view center position of the camera 120 is not the center of the image sensor, but the center of the region displayed through the display 130.

According to an embodiment, the processor 110 may identify the current magnification and may assess the amount of movement of the center point in operation 307. According to an embodiment, the processor 110 may identify the current magnification while the magnification is changed from the initial magnification to the final magnification. For example, the processor 110 may identify the current magnification (for example, x3.0 magnification) while the magnification is changed from the initial magnification (for example, x5.0 magnification) to the final magnification (for example, x1.0 magnification), and may calculate the amount of movement of the center point from the current magnification to the final magnification.

According to an embodiment, the processor 110 may move the center point of the preview image in operation 309. According to an embodiment, the processor 110 may move the center point of the preview image as the magnification of the camera 120 is switched from the initial magnification to the final magnification. According to an embodiment, as the magnification of the camera 120 is changed from the initial magnification to the final magnification gradually (or linearly), the processor 110 may gradually (or linearly) change the center point of the preview displayed on the display 130.

According to an embodiment, the processor 110 may determine whether the current magnification is identical to the camera switching magnification in operation 311. According to an embodiment, the processor 110 may determine whether the current magnification of the camera 120 is identical to the camera switching magnification calculated based on an offset acquired by camera calibration. For example, in a state in which a tele camera is driven, the processor 110 may determine whether the magnification becomes a magnification (for example, x5.0 magnification) at which switching to a wide camera occurs. In addition, for example, the processor 110 may determine whether the magnification becomes a camera switching magnification (for example, x1.125 magnification) at which switching from a wide camera to an ultra-wide camera occurs.

According to an embodiment, if the current magnification is deemed to be identical to the camera switching magnification, the processor 110 may switch the main camera in operation 313. According to an embodiment, the processor 110 may switch the main camera to a wide camera in response to the current magnification becoming the camera switching magnification (for example, x5.0 magnification) in a state in which images are acquired by using a tele camera. According to an embodiment, the processor 110 may switch the main camera to an ultra-wide camera in response to the current magnification becoming the camera switching magnification (for example, x1.125 magnification) in a state in which images are acquired by using a wide camera.

According to an embodiment, the processor 110 may acquire an image by using the main camera in response to switching of the main camera. According to an embodiment, the processor 110 may deactivate the first camera or switch the same to a standby state in response to switching from the first camera to the second camera.

According to an embodiment, when the current magnification is not deemed to be identical to the camera switching magnification, the processor 110 may display a preview of an image acquired through a camera on the screen in operation 315. According to an embodiment, when the current magnification is not deemed to be identical to the camera switching magnification, the processor 110 may display a preview of an image acquired through the first camera on the display 130 without switching the main camera from the first camera to the second camera.

According to an embodiment, the processor 110 may determine whether the current magnification is identical to the final magnification in operation 317. According to an embodiment, the processor 110 may determine whether the current magnification becomes a final magnification (for example, x5.0 magnification) related to a user input.

According to an embodiment, the processor 110 may end the zoom operation if the current magnification is deemed to be identical to the final magnification. According to an embodiment, the processor 110 may return to operation 307 when the current magnification is not deemed to be identical to the camera switching magnification, and may assess the amount of movement of the center point.

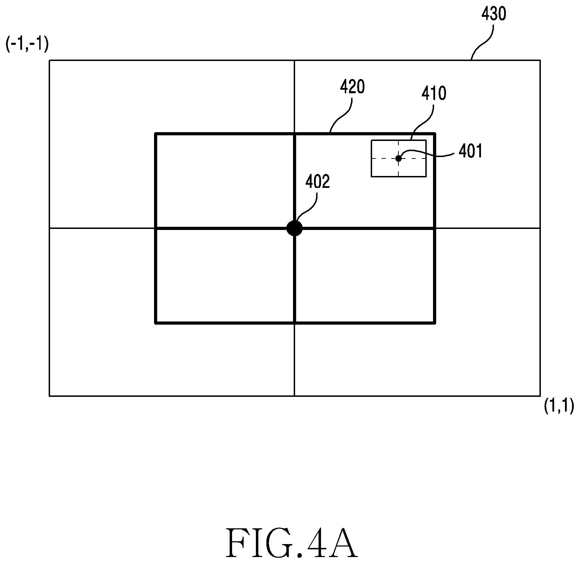

FIG. 4A illustrates the field of view each of multiple cameras of an electronic device according to an embodiment and the center of the field of view. FIG. 4B illustrates a movement of an image center while an electronic device according to an embodiment performs a zoom-out operation.

Referring to FIG. 4A, according to an embodiment, a first camera (for example, a tele camera) having a first field of view 410 may acquire an image centered at a first point 401. According to an embodiment, a second camera (for example, a wide camera) having a second field of view 420 may acquire an image centered at a second point 402. According to an embodiment, a third camera (for example, an ultra-wide camera) having a third field of view 430 may acquire an image centered at the second point 402.

Referring to FIG. 4B, the X-axis refers to a zoom level, and the Y-axis refers to a coordinate of the center point of an image.

According to an embodiment, the processor 110 may change the preview image center as the magnification of the camera 120 is changed. According to an embodiment, the processor 110 may move the center of the preview image while performing a zoom-out operation.

As illustrated in FIG. 4B, according to an embodiment, the processor 110 may linearly move the center of the preview image while the magnification of the camera 120 is gradually changed from the initial magnification (for example, x5.0 magnification) to the final magnification (for example, x5.0 magnification).

According to an embodiment, the processor 110 may acquire an image through the wide camera while performing a zoom-out operation from the initial magnification (for example, x5.0 magnification) to the camera switching magnification (for example, x1.125 magnification). According to an embodiment, the processor 110 gradually changes the preview image center from C1(0.4, -0.4) (for example, the first point 401 in FIG. 4A) to C2 while the magnification is gradually (or linearly) changed from the initial magnification to the camera switching magnification. For example, C2 may be calculated by Equation 1 above.

According to an embodiment, the processor 110 switches the main camera in response to the magnification of the camera 120 becoming the camera switching magnification. According to an embodiment, the processor 110 may switch the main camera with reference to a magnification configured such that an object is included in the range of the FOV of the camera 120. For example, the minimum value of a coordinate (for example, X-axis coordinate or Y-axis coordinate) related to the camera switching magnification may be *(Pc-Cc)-0.5*/*Xc.* In addition, for example, the maximum value of a coordinate related to the camera switching magnification may be *(Pc-Cc)+0.5*/*Xc.* In this case, *Pc* may refer to the image center position at the current magnification, and Cc may refer to an offset value.

According to an embodiment, the processor 110 may switch the main camera from the wide camera to the ultra-wide camera in response to the magnification becoming the camera switching magnification (for example, x1.125 magnification). According to an embodiment, the processor 110 may acquire an image through the ultra-wide camera while performing a zoom-out operation from the camera switching magnification to the final magnification. According to an embodiment, the processor 110 gradually changes the preview image center from C2 to C3(0,0) (for example, the second point 402 in FIG. 4A) while the magnification is gradually (or linearly) changed from the camera switching magnification to the final magnification.

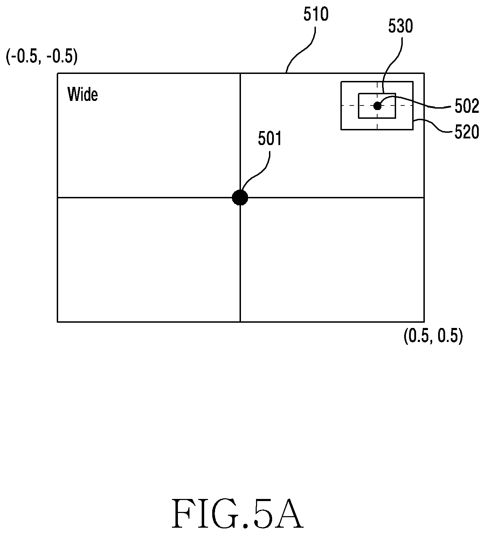

FIG. 5A illustrates the field of view each of multiple cameras of an electronic device according to an embodiment and the center of the field of view. FIG. 5B illustrates a movement of an image center while an electronic device according to an embodiment performs a zoom-in operation.

Referring to FIG. 5A, according to an embodiment, a first camera (for example, a wide camera) having a first field of view 510 may acquire an image centered at a first point 501. According to an embodiment, depending on the magnification, a second camera (for example, a tele camera) having a second field of view 520 or a third field of view 530 may acquire an image centered at a second point 502. For example, the zoom magnification (for example, x5.0 magnification) configured when acquiring the second field of view 520 may be lower than the zoom magnification (for example, x10.0 magnification) configured when acquiring the third field of view 530.

Referring to FIG. 5B, according to an embodiment, the processor 110 changes the preview image center as the magnification of the camera 120 is changed. According to an embodiment, the processor 110 may move the center of the preview image while performing a zoom-in operation.

As illustrated in FIG. 5B, according to an embodiment, the processor 110 may linearly move the center of the preview image while the magnification of the camera 120 is gradually changed from the initial magnification (for example, x1.0 magnification) to the final magnification (for example, x10.0 magnification).

According to an embodiment, the processor 110 may acquire an image through the wide camera while performing a zoom-out operation from the initial magnification (for example, x1.0 magnification) to the camera switching magnification (for example, x8.23 magnification). According to an embodiment, the processor 110 gradually changes the preview image center from C1(0,0) (for example, the first point 501 in FIG. 5A) to C2 while the magnification is gradually (or linearly) changed from the initial magnification to the camera switching magnification. For example, C2 may be calculated by Equation 1 above.

According to an embodiment, the processor 110 may switch the main camera in response to the magnification of the camera 120 becoming the camera switching magnification. According to an embodiment, the processor 110 may switch the main camera from the wide camera to the tele camera in response to the magnification becoming the camera switching magnification (for example, x8.23 magnification). According to an embodiment, the processor 110 may acquire an image through the tele camera while performing a zoom-in operation from the camera switching magnification to the final magnification. According to an embodiment, the processor 110 may gradually change the preview image center from C2 to C3(0.4, 0.4) (for example, the second point 502 in FIG. 5A) while the magnification is gradually (or linearly) changed from the camera switching magnification to the final magnification.

Fig. 6 is a block diagram illustrating an electronic device 601 in a network environment 600 according to various embodiments.

Referring to Fig. 6, the electronic device 601 in the network environment 600 may communicate with an electronic device 602 via a first network 698 (e.g., a short-range wireless communication network), or at least one of an electronic device 604 or a server 608 via a second network 699 (e.g., a long-range wireless communication network). According to an embodiment, the electronic device 601 may communicate with the electronic device 604 via the server 608. According to an embodiment, the electronic device 601 may include a processor 620, memory 630, an input module 650, a sound output module 655, a display module 660, an audio module 670, a sensor module 676, an interface 677, a connecting terminal 678, a haptic module 679, a camera module 680, a power management module 688, a battery 689, a communication module 690, a subscriber identification module (SIM) 696, or an antenna module 697. In some embodiments, at least one of the components (e.g., the connecting terminal 678) may be omitted from the electronic device 601, or one or more other components may be added in the electronic device 601. In some embodiments, some of the components (e.g., the sensor module 676, the camera module 680, or the antenna module 697) may be implemented as a single component (e.g., the display module 660).

The processor 620 may execute, for example, software (e.g., a program 640) to control at least one other component (e.g., a hardware or software component) of the electronic device 601 coupled with the processor 620, and may perform various data processing or computation. According to one embodiment, as at least part of the data processing or computation, the processor 620 may store a command or data received from another component (e.g., the sensor module 676 or the communication module 690) in volatile memory 632, process the command or the data stored in the volatile memory 632, and store resulting data in non-volatile memory 634. According to an embodiment, the processor 620 may include a main processor 621 (e.g., a central processing unit (CPU) or an application processor (AP)), or an auxiliary processor 623 (e.g., a graphics processing unit (GPU), a neural processing unit (NPU), an image signal processor (ISP), a sensor hub processor, or a communication processor (CP)) that is operable independently from, or in conjunction with, the main processor 621. For example, when the electronic device 601 includes the main processor 621 and the auxiliary processor 623, the auxiliary processor 623 may be adapted to consume less power than the main processor 621, or to be specific to a specified function. The auxiliary processor 623 may be implemented as separate from, or as part of the main processor 621.

The auxiliary processor 623 may control at least some of functions or states related to at least one component (e.g., the display module 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). According to an embodiment, the auxiliary processor 623 (e.g., an image signal processor or a communication processor) may be implemented as part of another component (e.g., the camera module 680 or the communication module 690) functionally related to the auxiliary processor 623. According to an embodiment, the auxiliary processor 623 (e.g., the neural processing unit) may include a hardware structure specified for artificial intelligence model processing. An artificial intelligence model may be generated by machine learning. Such learning may be performed, e.g., by the electronic device 601 where the artificial intelligence is performed or via a separate server (e.g., the server 608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634.

The program 640 may be stored in the memory 630 as software, and may include, for example, an operating system (OS) 642, middleware 644, or an application 646.

The input module 650 may receive a command or data to be used by another component (e.g., the processor 620) of the electronic device 601, from the outside (e.g., a user) of the electronic device 601. The input module 650 may include, for example, a microphone, a mouse, a keyboard, a key (e.g., a button), or a digital pen (e.g., a stylus pen).

The sound output module 655 may output sound signals to the outside of the electronic device 601. The sound output module 655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 660 may visually provide information to the outside (e.g., a user) of the electronic device 601. The display module 660 may include, for example, a display, a hologram device, or a projector and control circuitry to control a corresponding one of the display, hologram device, and projector. According to an embodiment, the display module 660 may include a touch sensor adapted to detect a touch, or a pressure sensor adapted to measure the intensity of force incurred by the touch.

The audio module 670 may convert a sound into an electrical signal and vice versa. According to an embodiment, the audio module 670 may obtain the sound via the input module 650, or output the sound via the sound output module 655 or a headphone of an external electronic device (e.g., an electronic device 602) directly (e.g., wired) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. According to an embodiment, the sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device (e.g., the electronic device 602) directly (e.g., wired) or wirelessly. According to an embodiment, the interface 677 may include, for example, a high definition multimedia interface (HDMI), a universal serial bus (USB) interface, a secure digital (SD) card interface, or an audio interface.

A connecting terminal 678 may include a connector via which the electronic device 601 may be physically connected with the external electronic device (e.g., the electronic device 602). According to an embodiment, the connecting terminal 678 may include, for example, a HDMI connector, a USB connector, a SD card connector, or an audio connector (e.g., a headphone connector).

The haptic module 679 may convert an electrical signal into a mechanical stimulus (e.g., a vibration or a movement) or electrical stimulus which may be recognized by a user via his tactile sensation or kinesthetic sensation. According to an embodiment, the haptic module 679 may include, for example, a motor, a piezoelectric element, or an electric stimulator.

The camera module 680 may capture a still image or moving images. According to an embodiment, the camera module 680 may include one or more lenses, image sensors, image signal processors, or flashes.

The power management module 688 may manage power supplied to the electronic device 601. According to one embodiment, the power management module 688 may be implemented as at least part of, for example, a power management integrated circuit (PMIC).

The battery 689 may supply power to at least one component of the electronic device 601. According to an embodiment, the battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the application processor (AP)) and supports a direct (e.g., wired) communication or a wireless communication. According to an embodiment, the communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as BluetoothTM, wireless-fidelity (Wi-Fi) direct, or infrared data association (IrDA)) or the second network 699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The wireless communication module 692 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 692 may support a high-frequency band (e.g., the mmWave band) to achieve, e.g., a high data transmission rate. The wireless communication module 692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 692 may support various requirements specified in the electronic device 601, an external electronic device (e.g., the electronic device 604), or a network system (e.g., the second network 699). According to an embodiment, the wireless communication module 692 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 697 may transmit or receive a signal or power to or from the outside (e.g., the external electronic device) of the electronic device 601. According to an embodiment, the antenna module 697 may include an antenna including a radiating element composed of a conductive material or a conductive pattern formed in or on a substrate (e.g., a printed circuit board (PCB)). According to an embodiment, the antenna module 697 may include a plurality of antennas (e.g., array antennas). In such a case, at least one antenna appropriate for a communication scheme used in the communication network, such as the first network 698 or the second network 699, may be selected, for example, by the communication module 690 (e.g., the wireless communication module 692) from the plurality of antennas. The signal or the power may then be transmitted or received between the communication module 690 and the external electronic device via the selected at least one antenna. According to an embodiment, another component (e.g., a radio frequency integrated circuit (RFIC)) other than the radiating element may be additionally formed as part of the antenna module 697.

According to various embodiments, the antenna module 697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 601 and the external electronic device 604 via the server 608 coupled with the second network 699. Each of the electronic devices 602 or 604 may be a device of a same type, or a different type, as the electronic device 601. According to an embodiment, all or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 601. The electronic device 601 may provide the outcome, with or without further processing of the outcome, as at least part of a reply to the request. To that end, a cloud computing, distributed computing, mobile edge computing (MEC), or client-server computing technology may be used, for example. The electronic device 601 may provide ultra low-latency services using, e.g., distributed computing or mobile edge computing. In another embodiment, the external electronic device 604 may include an internet-of-things (IoT) device. The server 608 may be an intelligent server using machine learning and/or a neural network. According to an embodiment, the external electronic device 604 or the server 608 may be included in the second network 699. The electronic device 601 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 640) including one or more instructions that are stored in a storage medium (e.g., internal memory 636 or external memory 638) that is readable by a machine (e.g., the electronic device 601). For example, a processor (e.g., the processor 620) of the machine (e.g., the electronic device 601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Fig. 7 is a block diagram 700 illustrating the camera module 680 according to various embodiments.

Referring to Fig. 7, the camera module 680 may include a lens assembly 710, a flash 720, an image sensor 730, an image stabilizer 740, memory 750 (e.g., buffer memory), or an image signal processor 760. The lens assembly 710 may collect light emitted or reflected from an object whose image is to be taken. The lens assembly 710 may include one or more lenses. According to an embodiment, the camera module 680 may include a plurality of lens assemblies 710. In such a case, the camera module 680 may form, for example, a dual camera, a 360-degree camera, or a spherical camera. Some of the plurality of lens assemblies 710 may have the same lens attribute (e.g., view angle, focal length, auto-focusing, f number, or optical zoom), or at least one lens assembly may have one or more lens attributes different from those of another lens assembly. The lens assembly 710 may include, for example, a wide-angle lens or a telephoto lens.

The flash 720 may emit light that is used to reinforce light reflected from an object. According to an embodiment, the flash 720 may include one or more light emitting diodes (LEDs) (e.g., a red-green-blue (RGB) LED, a white LED, an infrared (IR) LED, or an ultraviolet (UV) LED) or a xenon lamp. The image sensor 730 may obtain an image corresponding to an object by converting light emitted or reflected from the object and transmitted via the lens assembly 710 into an electrical signal. According to an embodiment, the image sensor 730 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 730 may be implemented using, for example, a charged coupled device (CCD) sensor or a complementary metal oxide semiconductor (CMOS) sensor.

The image stabilizer 740 may move the image sensor 730 or at least one lens included in the lens assembly 710 in a particular direction, or control an operational attribute (e.g., adjust the read-out timing) of the image sensor 730 in response to the movement of the camera module 680 or the electronic device 601 including the camera module 680. This allows compensating for at least part of a negative effect (e.g., image blurring) by the movement on an image being captured. According to an embodiment, the image stabilizer 740 may sense such a movement via the camera module 680 or the electronic device 601 using a gyro sensor (not shown) or an acceleration sensor (not shown) disposed inside or outside the camera module 680. According to an embodiment, the image stabilizer 740 may be implemented, for example, as an optical image stabilizer. The memory 750 may store, at least temporarily, at least part of an image obtained via the image sensor 730 for a subsequent image processing task. For example, if image capturing is delayed due to shutter lag or multiple images are quickly captured, a raw image obtained (e.g., a Bayer-patterned image, a high-resolution image) may be stored in the memory 750, and its corresponding copy image (e.g., a low-resolution image) may be previewed via the display module 660. Thereafter, if a specified condition is met (e.g., by a user's input or system command), at least part of the raw image stored in the memory 750 may be obtained and processed, for example, by the image signal processor 760. According to an embodiment, the memory 750 may be configured as at least part of the memory 630 or as a separate memory that is operated independently from the memory 630.

The image signal processor 760 may perform one or more image processing tasks with respect to an image obtained via the image sensor 730 or an image stored in the memory 750. The one or more image processing tasks may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 760 may perform control (e.g., exposure time control or read-out timing control) with respect to at least one (e.g., the image sensor 730) of the components included in the camera module 680. An image processed by the image signal processor 760 may be stored back in the memory 750 for further processing, or may be provided to an external component (e.g., the memory 630, the display module 660, the electronic device 602, the electronic device 604, or the server 608) outside the camera module 680. According to an embodiment, the image signal processor 760 may be configured as at least part of the processor 620, or as a separate processor that is operated independently from the processor 620. If the image signal processor 760 is configured as a separate processor from the processor 620, at least one image processed by the image signal processor 760 may be displayed, by the processor 620, via the display module 660 as it is or after being further processed.

According to an embodiment, the electronic device 601 may include a plurality of camera modules 680 having different attributes or functions. In such a case, at least one of the plurality of camera modules 680 may form, for example, a wide-angle camera and at least another of the plurality of camera modules 680 may form a telephoto camera. Similarly, at least one of the plurality of camera modules 680 may form, for example, a front camera and at least another of the plurality of camera modules 680 may form a rear camera.

As described above, an electronic device according to an embodiment (for example, the electronic device 100 in FIG. 1) may include multiple cameras, a display (for example, the display 130 in FIG. 1), and at least one processor (for example, the processor 110 in FIG. 1) electrically connected to the multiple cameras and the display. The at least one processor may acquire a first image through a first camera among the multiple cameras, display a preview centered at a first point in the first image on the display in a state in which magnification is configured to be a first magnification, acquire a user input for changing the magnification from the first magnification to a second magnification, gradually change the magnification from the first magnification to the second magnification in response to the user input, acquire a second image centered at a second point by using a second camera among the multiple cameras, change the preview displayed on the display from the first image to at least a partial region of the second image, display a preview centered at the second point in the second image on the display in response to the magnification being changed to the second magnification, and gradually move the center of the preview from the first point to the second point in response to the magnification being changed from the first magnification to the second magnification.

According to an embodiment, the first magnification may be larger than the second magnification.

According to an embodiment, when the first magnification is larger than the second magnification, the display may display multiple objects related to the multiple cameras, respectively, in a state in which a camera application is executed, and the user input may include a touch input regarding an object related to the second magnification among the multiple objects.

According to an embodiment, when the first magnification is larger than the second magnification, the at least one processor may move the center of the preview by using at least one of a prism and a mirror.

According to an embodiment, when the first magnification is larger than the second magnification, the at least one processor may activate the second camera prior to acquisition of the user input, and switch the activated second camera to a standby state.

According to an embodiment, when the first magnification is larger than the second magnification, the at least one processor may deactivate the first camera or switch the first camera to a standby state while acquiring the second image by using the second camera.

According to an embodiment, when the first magnification is larger than the second magnification, the at least one processor may move the center of the preview based on an offset acquired from calibration.

According to an embodiment, when the first magnification is larger than the second magnification, the at least one processor may calculate, based on the offset acquired from calibration, a designated magnification at which switching to the second camera occurs, and switch from the first camera to the second camera in response to the magnification becoming the calculated designated magnification.

According to an embodiment, the first magnification may be smaller than the second magnification.

According to an embodiment, when the first magnification is smaller than the second magnification, the display may display multiple objects related to the multiple cameras, respectively, in a state in which a camera application is executed, and the user input may include acquiring a touch input related to an object related to the second magnification among the multiple objects.

According to an embodiment, when the first magnification is smaller than the second magnification, the at least one processor may move the center of the preview by using at least one of a prism and a mirror.

According to an embodiment, when the first magnification is smaller than the second magnification, the at least one processor may activate the second camera prior to acquisition of the user input, and switch the activated second camera to a standby state.

According to an embodiment, when the first magnification is smaller than the second magnification, the at least one processor may move the center of the preview based on an offset acquired from calibration.

According to an embodiment, when the first magnification is smaller than the second magnification, the at least one processor may calculate, based on the offset acquired from calibration, a designated magnification at which switching to the second camera occurs, and switch from the first camera to the second camera in response to the magnification becoming the calculated designated magnification.

As described above, a method for operating an electronic device (for example, the electronic device 100 in FIG. 1) according to an embodiment may include the operations of acquiring a first image through a first camera among multiple cameras, displaying a preview centered at a first point in the first image on a display in a state in which magnification is configured to be a first magnification, acquiring a user input for changing the magnification from the first magnification to a second magnification, gradually changing the magnification from the first magnification to the second magnification in response to the user input, acquiring a second image centered at a second point by using a second camera among the multiple cameras, changing the preview displayed on the display from the first image to at least a partial region of the second image, displaying a preview centered at the second point in the second image on the display in response to the magnification being changed to the second magnification, and moving the center of the preview gradually from the first point to the second point in response to the magnification being changed from the first magnification to the second magnification.

In the method for operating an electronic device according to an embodiment, the first magnification may be larger than the second magnification.

In the method for operating an electronic device according to an embodiment, the operation of moving the center of the preview may include an operation of moving the center of the preview by using at least one of a prism and a mirror.

The method for operating an electronic device according to an embodiment may include an operation of activating the second camera prior to acquisition of the user input, and switching the activated second camera to a standby state.

The method for operating an electronic device according to an embodiment may include an operation of deactivating the first camera or switching the first camera to a standby state in response to acquisition of the user input.

In the method for operating an electronic device according to an embodiment, the operation of moving the center of the preview may include an operation of moving the center of the preview based on an offset acquired from calibration.

## Claims

1. An electronic device (100, 601) comprising:
multiple cameras (120, 680);
a display (130, 660); and
at least one processor (110, 620) electrically connected to the multiple cameras and the display,
wherein the at least one processor is configured to:
acquire a first image through a first camera among the multiple cameras;
display a preview centered at a first point in the first image on the display in a state in which magnification is configured to be a first magnification;
acquire a user input for changing the magnification from the first magnification to a second magnification;
determine a camera switching magnification between the first magnification and the second magnification; and
in response to the user input:
gradually change the magnification from the first magnification to the second magnification;
while changing the magnification from the first magnification to the camera switching magnification, display a preview in which a center of an image acquired using the first camera is gradually moved from the first point to a coordinate corresponding to the camera switching magnification;
acquire a second image centered at a second point by using a second camera among the multiple cameras;
in response to the magnification becoming identical to the camera switching magnification, change the preview displayed on the display from the first image to at least a partial region of the second image; and
while changing the magnification from the camera switching magnification to the second magnification, display a preview in which a center of an image acquired using the second camera is gradually moved from the coordinate to the second point.

2. The electronic device (100, 601) of claim 1, wherein the at least one processor (110, 620) is configured to display multiple icons related to the multiple cameras (120, 680), respectively, on the display in a state in which a camera application is executed, and
the user input comprises a touch input regarding an icon related to the second magnification among the multiple icons.

3. The electronic device (100, 601) of claim 1, wherein the at least one processor (110, 620) is configured to move the center of the preview by using at least one of a prism and a mirror.

4. The electronic device (100, 601) of claim 1, wherein the at least one processor (110, 620) is configured to activate the second camera prior to acquisition of the user input, and switch the activated second camera to a standby state.

5. The electronic device (100, 601) of claim 1, wherein the at least one processor (110, 620) is configured to deactivate the first camera or switch the first camera to a standby state while acquiring the second image by using the second camera.

6. The electronic device of claim 1, wherein the at least one processor is configured to move the center of the preview based on an offset acquired from calibration.

7. The electronic device (100, 601) of claim 1, wherein the at least one processor (110, 620) is configured to:
calculate, based on an offset value acquired from calibration, the camera switching magnification; and
switch from the first camera to the second camera in response to the magnification becoming identical to the camera switching magnification.

8. The electronic device (100, 601) of claim 1, wherein the first magnification is larger than the second magnification.

9. The electronic device (100, 601) of claim 1, wherein the first magnification is smaller than the second magnification.

10. A method for operating an electronic device (100, 601), the method comprising:
acquiring a first image through a first camera among multiple cameras;
displaying a preview centered at a first point in the first image on a display in a state in which magnification is configured to be a first magnification;
acquiring a user input for changing the magnification from the first magnification to a second magnification;
determining a camera switching magnification between the first magnification and the second magnification; and
in response to the user input:
gradually changing the magnification from the first magnification to the second magnification;
while changing the magnification from the first magnification to the camera switching magnification, displaying a preview in which a center of an image acquired using the first camera is gradually moved from the first point to a coordinate corresponding to the camera switching magnification;
acquiring a second image centered at a second point by using a second camera among the multiple cameras;
in response to the magnification becoming identical to the camera switching magnification, changing the preview displayed on the display from the first image to at least a partial region of the second image; and
while changing the magnification from the camera switching magnification to the second magnification, displaying a preview in which a center of an image acquired using the second camera is gradually moved from the coordinate to the second point.

11. The method for operating an electronic device (100, 601) of claim 10, wherein the first magnification is smaller than the second magnification.

12. The method for operating an electronic device (100, 601) of claim 10, wherein the moving of the center of the preview comprises moving the center of the preview by using at least one of a prism and a mirror.

13. The method for operating an electronic device (100, 601) of claim 10, comprising activating the second camera prior to acquisition of the user input, and switching the activated second camera to a standby state.

14. The method for operating an electronic device (100, 601) of claim 10, comprising deactivating the first camera or switching the first camera to a standby state while acquiring the second image by using the second camera.

15. The method for operating an electronic device of claim 14, wherein the moving of the center of the preview comprises moving the center of the preview based on an offset acquired from calibration.

## Patentansprüche

1. Elektronische Vorrichtung (100, 601), umfassend:
mehrere Kameras (120, 680);
eine Anzeige (130, 660); und
zumindest einen Prozessor (110, 620), der elektrisch mit den mehreren Kameras und der Anzeige verbunden ist,
wobei der zumindest eine Prozessor zu Folgendem konfiguriert ist:
Erfassen eines ersten Bildes durch eine erste Kamera unter den mehreren Kameras;
Anzeigen einer Vorschau, die an einem ersten Punkt in dem ersten Bild zentriert ist, auf der Anzeige in einem Zustand, in dem Vergrößerung dazu konfiguriert ist, eine erste Vergrößerung zu sein;
Erfassen einer Benutzereingabe zum Ändern der Vergrößerung von der ersten Vergrößerung zu einer zweiten Vergrößerung;
Bestimmen einer Kameraumschaltvergrößerung zwischen der ersten Vergrößerung und der zweiten Vergrößerung; und
als Reaktion auf die Benutzereingabe:
allmähliches Ändern der Vergrößerung von der ersten Vergrößerung zu der zweiten Vergrößerung;
während des Änderns der Vergrößerung von der ersten Vergrößerung zu der Kameraumschaltvergrößerung, Anzeigen einer Vorschau, in der eine Mitte eines Bildes, das unter Verwendung der ersten Kamera erfasst wird, allmählich von dem ersten Punkt zu einer Koordinate entsprechend der Kameraumschaltvergrößerung bewegt wird;
Erfassen eines zweiten Bildes, das an einem zweiten Punkt zentriert ist, durch Verwenden einer zweiten Kamera unter den mehreren Kameras;
als Reaktion darauf, dass die Vergrößerung identisch mit der Kameraumschaltvergrößerung wird, Ändern der Vorschau, die auf der Anzeige angezeigt wird, von dem ersten Bild zu zumindest einer Teilregion des zweiten Bildes; und
während des Änderns der Vergrößerung von der Kameraumschaltvergrößerung zu der zweiten Vergrößerung, Anzeigen einer Vorschau, in der eine Mitte eines Bildes, das unter Verwendung der zweiten Kamera erfasst wird, allmählich von der Koordinate zu dem zweiten Punkt bewegt wird.

2. Elektronische Vorrichtung (100, 601) nach Anspruch 1, wobei der zumindest eine Prozessor (110, 620) dazu konfiguriert ist, mehrere Symbole, die sich jeweils auf die mehreren Kameras (120, 680) beziehen, auf der Anzeige in einem Zustand anzuzeigen, in dem eine Kameraanwendung ausgeführt wird, und
die Benutzereingabe eine Berührungseingabe in Bezug auf ein Symbol, das sich auf die zweite Vergrößerung bezieht, unter den mehreren Symbolen umfasst.

3. Elektronische Vorrichtung (100, 601) nach Anspruch 1, wobei der zumindest eine Prozessor (110, 620) dazu konfiguriert ist, die Mitte der Vorschau durch Verwenden von zumindest einem von einem Prisma und einem Spiegel zu bewegen.

4. Elektronische Vorrichtung (100, 601) nach Anspruch 1, wobei der zumindest eine Prozessor (110, 620) dazu konfiguriert ist, die zweite Kamera vor Erfassung der Benutzereingabe zu aktivieren und die aktivierte zweite Kamera in einen Standby-Zustand umzuschalten.

5. Elektronische Vorrichtung (100, 601) nach Anspruch 1, wobei der zumindest eine Prozessor (110, 620) dazu konfiguriert ist, die erste Kamera zu deaktivieren oder die erste Kamera in einen Standby-Zustand umzuschalten, während das zweite Bild durch Verwenden der zweiten Kamera erfasst wird.

6. Elektronische Vorrichtung nach Anspruch 1, wobei der zumindest eine Prozessor dazu konfiguriert ist, die Mitte der Vorschau basierend auf einem Versatz zu bewegen, der aus Kalibrierung erfasst wird.

7. Elektronische Vorrichtung (100, 601) nach Anspruch 1, wobei der zumindest eine Prozessor (110, 620) zu Folgendem konfiguriert ist:
Berechnen, basierend auf einem Versatzwert, der aus Kalibrierung erfasst wird, der Kameraumschaltvergrößerung, und
Umschalten von der ersten Kamera zu der zweiten Kamera als Reaktion darauf, dass die Vergrößerung identisch mit der Kameraumschaltvergrößerung wird.

8. Elektronische Vorrichtung (100, 601) nach Anspruch 1, wobei die erste Vergrößerung größer als die zweite Vergrößerung ist.

9. Elektronische Vorrichtung (100, 601) nach Anspruch 1, wobei die erste Vergrößerung kleiner als die zweite Vergrößerung ist.

10. Verfahren zum Betreiben einer elektronischen Vorrichtung (100, 601), wobei das Verfahren Folgendes umfasst:
Erfassen eines ersten Bildes durch eine erste Kamera unter mehreren Kameras;
Anzeigen einer Vorschau, die an einem ersten Punkt in dem ersten Bild zentriert ist, auf einer Anzeige in einem Zustand, in dem Vergrößerung dazu konfiguriert ist, eine erste Vergrößerung zu sein;
Erfassen einer Benutzereingabe zum Ändern der Vergrößerung von der ersten Vergrößerung zu einer zweiten Vergrößerung;
Bestimmen einer Kameraumschaltvergrößerung zwischen der ersten Vergrößerung und der zweiten Vergrößerung; und
als Reaktion auf die Benutzereingabe:
allmähliches Ändern der Vergrößerung von der ersten Vergrößerung zu der zweiten Vergrößerung;
während des Änderns der Vergrößerung von der ersten Vergrößerung zu der Kameraumschaltvergrößerung, Anzeigen einer Vorschau, in der eine Mitte eines Bildes, das unter Verwendung der ersten Kamera erfasst wird, allmählich von dem ersten Punkt zu einer Koordinate entsprechend der Kameraumschaltvergrößerung bewegt wird;
Erfassen eines zweiten Bildes, das an einem zweiten Punkt zentriert ist, durch Verwenden einer zweiten Kamera unter den mehreren Kameras;
als Reaktion darauf, dass die Vergrößerung identisch mit der Kameraumschaltvergrößerung wird, Ändern der Vorschau, die auf der Anzeige angezeigt wird, von dem ersten Bild zu zumindest einer Teilregion des zweiten Bildes; und
während des Änderns der Vergrößerung von der Kameraumschaltvergrößerung zu der zweiten Vergrößerung, Anzeigen einer Vorschau, in der eine Mitte eines Bildes, das unter Verwendung der zweiten Kamera erfasst wird, allmählich von der Koordinate zu dem zweiten Punkt bewegt wird.

11. Verfahren zum Betreiben einer elektronischen Vorrichtung (100, 601) nach Anspruch 10, wobei die erste Vergrößerung kleiner als die zweite Vergrößerung ist.

12. Verfahren zum Betreiben einer elektronischen Vorrichtung (100, 601) nach Anspruch 10, wobei das Bewegen der Mitte der Vorschau Bewegen der Mitte der Vorschau durch Verwenden von zumindest einem von einem Prisma und einem Spiegel umfasst.

13. Verfahren zum Betreiben einer elektronischen Vorrichtung (100, 601) nach Anspruch 10, umfassend Aktivieren der zweiten Kamera vor Erfassung der Benutzereingabe und Umschalten der aktivierten zweiten Kamera in einen Standby-Zustand.

14. Verfahren zum Betreiben einer elektronischen Vorrichtung (100, 601) nach Anspruch 10, umfassend Deaktivieren der ersten Kamera oder Umschalten der ersten Kamera in einen Standby-Zustand, während das zweite Bild durch Verwenden der zweiten Kamera erfasst wird.

15. Verfahren zum Betreiben einer elektronischen Vorrichtung nach Anspruch 14, wobei das Bewegen der Mitte der Vorschau Bewegen der Mitte der Vorschau basierend auf einem Versatz, der aus Kalibrierung erfasst wird, umfasst.

## Revendications

1. Dispositif électronique (100, 601) comprenant :
de multiples caméras (120, 680) ;
un dispositif d'affichage (130, 660) ; et
au moins un processeur (110, 620) connecté électriquement aux multiples caméras et au dispositif d'affichage,
ledit au moins un processeur étant configuré pour :
acquérir une première image par l'intermédiaire d'une première caméra parmi les multiples caméras ;
afficher une prévisualisation centrée sur un premier point dans la première image sur le dispositif d'affichage dans un état dans lequel un grossissement est configuré pour être un premier grossissement ;
acquérir une entrée utilisateur destinée à faire passer le grossissement du premier grossissement à un second grossissement ;
déterminer un grossissement de commutation de caméra entre le premier grossissement et le second grossissement ; et
en réponse à l'entrée utilisateur :
faire passer progressivement le grossissement du premier grossissement au second grossissement ;
pendant le passage du grossissement du premier grossissement au grossissement de commutation de caméra, afficher une prévisualisation dans laquelle un centre d'une image acquise à l'aide de la première caméra est progressivement déplacé du premier point à une coordonnée correspondant au grossissement de commutation de caméra ;
acquérir une seconde image centrée sur un second point à l'aide d'une seconde caméra parmi les multiples caméras ;
en réponse au grossissement devenant identique au grossissement de commutation de caméra,
faire passer la prévisualisation affichée sur le dispositif d'affichage de la première image à au moins une zone partielle de la seconde image ; et
pendant le passage du grossissement du grossissement de commutation de caméra au second grossissement, afficher une prévisualisation dans laquelle un centre d'une image acquise à l'aide de la seconde caméra est progressivement déplacé de la coordonnée au second point.

2. Dispositif électronique (100, 601) de la revendication 1, ledit au moins un processeur (110, 620) étant configuré pour afficher respectivement de multiples icônes liées au multiples caméras (120, 680) sur le dispositif d'affichage dans un état dans lequel une application de caméra est exécutée, et
ladite entrée utilisateur comprenant une entrée tactile concernant une icône liée au second grossissement parmi les multiples icônes.

3. Dispositif électronique (100, 601) de la revendication 1, ledit au moins un processeur (110, 620) étant configuré pour déplacer le centre de la prévisualisation à l'aide d'au moins l'un d'un prisme et d'un miroir.

4. Dispositif électronique (100, 601) de la revendication 1, ledit au moins un processeur (110, 620) étant configuré pour activer la seconde caméra avant l'acquisition de l'entrée utilisateur, et commuter la seconde caméra activée dans un état de veille.

5. Dispositif électronique (100, 601) de la revendication 1, ledit au moins un processeur (110, 620) étant configuré pour désactiver la première caméra ou commuter la première caméra dans un état de veille pendant l'acquisition de la seconde image à l'aide de la seconde caméra.

6. Dispositif électronique de la revendication 1, ledit au moins un processeur étant configuré pour déplacer le centre de la prévisualisation sur la base d'un décalage acquis à partir d'un étalonnage.

7. Dispositif électronique (100, 601) de la revendication 1, ledit au moins un processeur (110, 620) étant configuré pour :
calculer, sur la base d'une valeur de décalage acquise à partir d'un étalonnage, le grossissement de commutation de caméra et commuter de la première caméra à la seconde caméra en réponse au grossissement devenant identique au grossissement de commutation de caméra.

8. Dispositif électronique (100, 601) de la revendication 1, ledit premier grossissement étant plus grand que le second grossissement.

9. Dispositif électronique (100, 601) de la revendication 1, ledit premier grossissement étant plus petit que le second grossissement.

10. Procédé permettant de faire fonctionner un dispositif électronique (100, 601), le procédé comprenant :
l'acquisition d'une première image par l'intermédiaire d'une première caméra parmi de multiples caméras ;
l'affichage d'une prévisualisation centrée sur un premier point dans la première image sur un dispositif d'affichage dans un état dans lequel un grossissement est configuré pour être un premier grossissement ;
l'acquisition d'une entrée utilisateur destinée à faire passer le grossissement du premier grossissement à un second grossissement ;
la détermination d'un grossissement de commutation de caméra entre le premier grossissement et le second grossissement ; et
en réponse à l'entrée utilisateur :
le passage progressif du grossissement du premier grossissement au second grossissement ;
pendant le passage du grossissement du premier grossissement au grossissement de commutation de caméra, l'affichage d'une prévisualisation dans laquelle un centre d'une image acquise à l'aide de la première caméra est progressivement déplacé du premier point vers une coordonnée correspondant au grossissement de commutation de caméra ;
l'acquisition d'une seconde image centrée sur un second point à l'aide d'une seconde caméra parmi les multiples caméras ;
en réponse au grossissement qui devient identique au grossissement de commutation de caméra,
le passage de la prévisualisation affichée sur le dispositif d'affichage de la première image à au moins une zone partielle de la seconde image ; et
pendant le passage du grossissement du grossissement de commutation de caméra au second grossissement, l'affichage d'une prévisualisation dans laquelle un centre d'une image acquise à l'aide de la seconde caméra est progressivement déplacé de la coordonnée au second point.

11. Procédé permettant de faire fonctionner un dispositif électronique (100, 601) de la revendication 10, ledit premier grossissement étant plus petit que le second grossissement.

12. Procédé permettant de faire fonctionner un dispositif électronique (100, 601) de la revendication 10, ledit déplacement du centre de la prévisualisation comprenant le déplacement du centre de la prévisualisation à l'aide d'au moins l'un d'un prisme et d'un miroir.

13. Procédé permettant de faire fonctionner un dispositif électronique (100, 601) de la revendication 10, comprenant l'activation de la seconde caméra avant l'acquisition de l'entrée utilisateur, et la commutation de la seconde caméra activée dans un état de veille.

14. Procédé permettant de faire fonctionner un dispositif électronique (100, 601) de la revendication 10, comprenant la désactivation de la première caméra ou la commutation de la première caméra dans un état de veille pendant l'acquisition de la seconde image à l'aide de la seconde caméra.

15. Procédé permettant de faire fonctionner un dispositif électronique de la revendication 14, ledit déplacement du centre de la prévisualisation comprenant le déplacement du centre de la prévisualisation sur la base d'un décalage acquis à partir d'un étalonnage.
